# DEMANDE DE BREVET EUROPEEN

(11) **EP 0 524 903 A1**
(43) Date de publication de la demande: **27.01.1993**
(21) Numéro de dépôt: 92460022.4
(22) Date de dépôt: 21.07.1992
(51) Int. Cl.: B60P 1/42, B60P 1/60

(54) **Procédé et dispositif pour vider intégralement de ses résidus la carrosserie d'un véhicule de transport de matières pulvérulentes ou granulaires**

(30) Priorité: 24.07.1991 FR 9109629
(71) Demandeur: TECHNIQUE SERVICE CARROSSERIE INDUSTRIELLE, F-22170 Plouagat (FR)
(72) Inventeur: Blais, Christian, F-22170 Plelo (FR); Denes, Claude, F-22200 Guingamp (FR)
(74) Mandataire: Le Faou, Daniel

(57) **Abrégé**

Procédé et dispositif pour vider intégralement de ses résidus la carrosserie d'un véhicule de transport de matières pulvérulentes ou granulaires.

L'invention est applicable à une carrosserie de véhicule dont le fond est équipé d'au moins une vis d'Archimème rotative guidée dans un auget ; selon l'invention, alors que la vis d'Archimède (3) est mise en rotation, on insuffle de l'air comprimé en direction de la zone comprise entre la vis (3) et le fond (20) de l'auget (2), à l'aide d'un ensemble de jets d'air (j0, j1, j′1, j2) répartis tout le long de la vis (3) et dirigés vers l'aval, ces jets d'air étant mis en oeuvre séquentiellement d'amont en aval de manière à refouler progressivement les résidus vers un orifice de sortie situé à l'extrémité aval de la vis, où on les récupère.

Equipement d'un véhicule de transport de matières pulvérulentes ou granulaires, par exemple d'aliments pour le bétail, de graines ou d'engrais.

## Description

La présente invention concerne un procédé et un dispositif de vidage intégral de la carrosserie d'un véhicule de transport de matières pulvérulentes ou granulaires.

Par le terme "carrosserie", on entend aussi bien une citerne, par exemple de forme générale cylindrique ou semi-cylindrique, qu'un fourgon de section rectangulaire. La carrosserie peut être soit installée sur un châssis porteur, soit sur un châssis de remorque ou de semi-remorque.

La carrosserie peut être compartimentée, des cloisons internes délimitant alors plusieurs enceintes pouvant recevoir des matières différentes. La livraison de la matière sélectionnée à l'aide des vis de transport se fait alors après ouverture de trappes appropriées correspondant à ce compartiment.

Ce genre de véhicule est notamment utilisé pour transporter des aliments pour le bétail tels que des granulés ou des farines, des grains notamment des céréales, des engrais, etc.

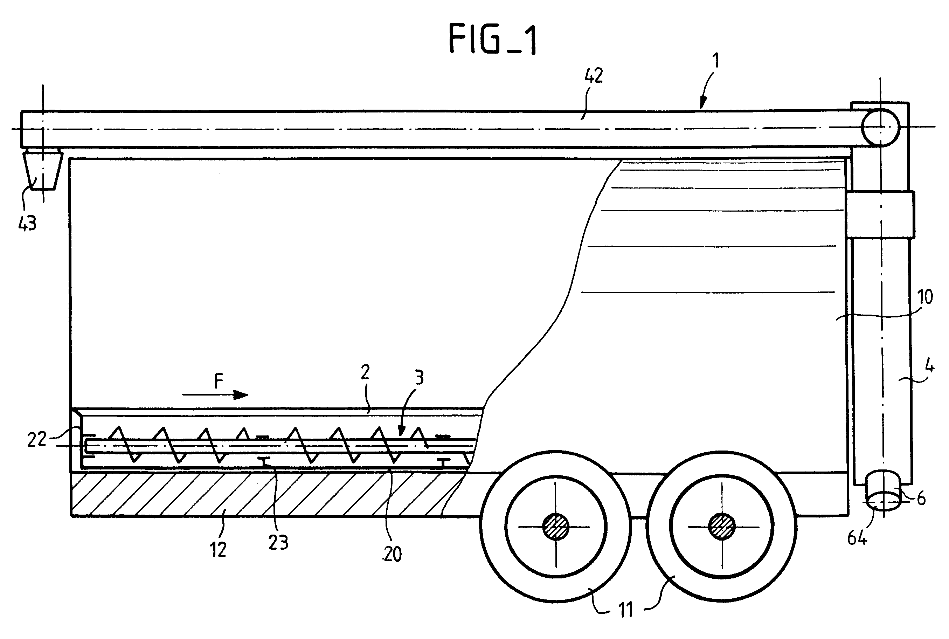

La figure 1 représente, en vue de côté et partiellement coupée, et de manière très schématique, un véhicule de type bien connu qui sert à transporter des matières en vrac, pulvérulentes ou granulaires.

Le véhicule 1 possède une carrosserie telle qu'une citerne par exemple, référencée 10 portée par un châssis 12 formant le fond de la carrosserie, et montée sur roues 11. La carrosserie peut soit former partie intégrante d'un véhicule, constituant un camion, soit être tractée par un véhicule tracteur indépendant. Dans l'exemple représenté, la carrosserie 10 n'est pas compartimentée.

A la partie supérieure de la carrosserie sont prévues des ouvertures appropriées (non représentées) permettant le remplissage de la carrosserie. Au fond de la carrosserie est montée une ou plusieurs vis de transport 3 disposée(s) horizontalement et longitudinalement. Il s'agit d'une vis d'Archimède ayant une lame enroulée en hélice sur un arbre de manière à former une vis de transport. La vis est entraînée en rotation autour de son axe par des moyens appropriés, par exemple un ou plusieurs moteurs hydrauliques non représentés montés en bout de vis.

Chaque vis d'Archimède est guidée en rotation dans un auget 2 de forme générale semi-cylindrique. La vis est généralement formée de plusieurs tronçons co-axiaux, fixés bout à bout et guidés, dans leur zone de jonction, dans des paliers intermédiaires 23. La cloison d'extrémité amont de l'auget 2 constitue un flasque 22 formant également palier de guidage de la vis 3.

Le sens de rotation de la vis 3 est tel qu'il déplace les matières contenues dans la citerne de gauche à droite sur la figure 1, vers l'arrière de la carrosserie, comme cela est symbolisé par la flèche F. A l'extrémité aval de la vis 3 se trouve une autre vis disposée transversalement à l'arrière de la carrosserie. Cette vis, qui n'est pas visible à la figure 1, est mue en rotation de la même manière que la vis 3, et amène les matières qui lui sont fournies par cette dernière au pied d'un conduit vertical 4. Ce dernier renferme lui-même une vis d'Archimède qui fait remonter les matières dans un conduit orientable 42 situé à la partie haute de la citerne. Le conduit 42 renferme également une vis d'Archimède. Il peut à la fois pivoter vers le haut et vers le côté et est pourvu à son extrémité libre (extrémité aval) d'un bec déverseur 43. En orientant convenablement, grâce à des moyens appropriés non représentés tels que des vérins hydrauliques, le conduit 42, on peut amener le bec 43 dans l'emplacement souhaité pour recevoir les matières livrées, en particulier dans l'ouverture d'un silo de stockage.

On notera que, selon une caractéristique de l'invention, il est prévu, à la base du conduit 4, un manchon 6 possédant un orifice 64 d'évacuation des résidus de vidage, et dont la fonction sera expliquée plus loin.

Il n'est pas possible de vider complètement la carrosserie, des matières résiduelles restant contenues dans celle-ci à la fin d'une opération de livraison de matières. En effet, une grande quantité de résidus contenus dans les conduits 4 et 42 retombe au pied du conduit vertical 4. Une certaine quantité de résidus subsiste par ailleurs entre le filet des vis situées en bas de la carrosserie et le fond des augets recevant ces vis.

Ceci pose un problème lorsqu'il est nécessaire de changer la nature du produit à livrer, car une portion de l'ancien produit se retrouve nécessairement dans le nouveau. Les usagers essayent de résoudre cette difficulté de manière jusqu'ici empirique. Les vis d'alimentation étant mises en marche, le nouveau produit pousse vers l'extérieur les résidus de l'ancien produit, et l'usager surveille visuellement la nature du produit sortant. Lorsqu'il pense que le produit sortant est pur, cette appréciation étant basée sur la couleur, la granulométrie et/ou la consistance du produit, il arrête les vis d'alimentation. On considère alors que le produit contenu dans la citerne est exclusivement du nouveau produit.

On comprend aisément qu'une telle méthode n'est pas satisfaisante. Elle est source d'erreur, et représente donc un risque de contamination qui peut être très gênant, notamment lorsqu'on a affaire à des aliments de nature différente, dont le nouveau est destiné à des animaux fragiles sur le plan alimentaire ; c'est notamment le cas du lapin et du cheval.

En outre, le produit récupéré est un mélange de l'ancien et du nouveau produit et ne peut pas toujours être recyclé.

Le même problème se pose dans le cas d'une carrosserie compartimentée, lorsqu'on procède à une nouvelle livraison.

L'invention a pour objectif de résoudre ces problèmes en proposant un procédé et un dispositif de vidage intégral de la carrosserie, permettant de récupérer complètement, ou pratiquement complètement, les résidus qui restent dans la carrosserie à l'issue d'une livraison.

Un autre objectif de l'invention est de proposer un dispositif peut coûteux et peu encombrant, et dont l'utilisation puisse se faire facilement, même par des usagers peu expérimentés.

Ces résultats sont atteints grâce au procédé selon l'invention, ce procédé consistant, alors que la vis d'Archimède (ou les vis d'Archimède) équipant le fond de la carrosserie est (sont) mise(s) en rotation, à insuffler de l'air comprimé en direction de la zone comprise entre la (ou les) vis et le fond de l'auget à l'aide d'un ensemble de jets d'air répartis tout le long de la vis (ou des vis) et qui sont dirigés vers l'aval si on considère le sens de déplacement des matières transportées par la (ou les) vis, ces jets d'air étant mis en oeuvre séquentiellement d'amont en aval de manière à refouler progressivement les résidus vers un orifice de sortie situé à l'extrémité aval de la (ou des) vis, orifice où les résidus sont récupérés.

Le dispositif objet de l'invention est remarquable en ce qu'il comprend une série de buses d'insufflation d'air comprimé, qui sont disposées régulièrement le long de l'auget recevant la vis d'Archimède et qui sont adaptées pour produire dans la zone comprise entre cette vis et le fond d'auget, des jets d'air dirigés vers l'aval (si on considère le sens de déplacement des matières transportées par la vis), un orifice de sortie des résidus étant prévu à l'extrémité aval de la vis.

Par ailleurs, selon un certain nombre de caractéristiques additionnelles intéressantes :
- le dispositif comprend une série de buses disposées sur le côté de l'auget et agencées pour produire des jets d'air dirigés obliquement vers le bas et vers l'aval ;
- le dispositif comporte des buses agencées pour produire des jets d'air dirigés tangentiellement au fond de l'auget, parallèlement à l'axe de la vis ;
- ces buses, qui produisent des jets d'air dirigés tangentiellement au fond de l'auget et parallèlement à l'axe de la vis, sont disposés dans les flasques correspondant à la cloison fermant l'extrémité amont de l'auget, et/ou dans les supports des paliers de guidage de la vis ;
- le dispositif comporte des moyens permettant d'actionner séquentiellement l'ensemble des buses de l'amont vers l'aval, ces moyens comprenant par exemple un ensemble d'électrovannes piloté par une armoire de commande programmable ;
- les buses reçoivent l'air comprimé d'une bouteille alimentée par un compresseur équipant le véhicule ;
- si la carrosserie est équipée de plusieurs vis d'Archimède travaillant en synchronisme à la suite l'une de l'autre, un ensemble de buses d'insufflation d'air comprimé est associé à chacune d'entre elles ;
- dans le cas où le dispositif équipe une ou plusieurs vis d'Archimède qui débouchent au pied d'un conduit vertical lui-même pourvu d'une vis d'Archimède adaptée pour remonter les matières dans un conduit déverseur orientable disposé à la partie haute de la carrosserie, l'orifice de sortie est placé à la base de ce conduit vertical, de manière à permettre l'évacuation par gravité des résidus contenus dans celui-ci ;
- dans ce cas, le dispositif comprend de préférence au moins une buse d'insufflation d'air comprimé qui est disposée dans la partie inférieure du conduit vertical et est adaptée pour favoriser l'évacuation des résidus vers l'orifice de sortie, par la voie pneumatique ;
- dans un mode de réalisation préférentiel, l'orifice de sortie constitue l'ouverture d'un manchon qui se raccorde à la base du conduit vertical en interférant partiellement avec le fond du conduit (celui-ci étant par conséquent échancré), et qui est dirigé obliquement vers le bas ;
- Ce manchon est pourvu d'un volet obturateur manoeuvrable manuellement ;
- le manchon est pourvu de moyens de fixation rapide aptes à coopérer avec des moyens d'assemblage complémentaires prévus sur un sac de récupération des résidus, ce qui permet la mise en place aisée de ce dernier sur le manchon.

D'autres caractéristiques et avantages de l'invention apparaîtront de la description qui va suivre, faite en référence aux dessins annexés qui en présentent un mode de réalisation et de mise en oeuvre préférentiels.

Sur ces dessins :
- la figure 2 représente en perspective l'ensemble des matériels servant à transporter les matières qui équipent une carrosserie telle que celle représentée à la figure 1, à savoir les augets de guidage des vis (ces dernières n'étant pas représentées), le conduit vertical et une partie du conduit supérieur déverseur, cette vue étant destinée à montrer l'implantation des différentes buses d'insufflation d'air conformément à l'invention ;
- la figure 3 est une vue en coupe transversale de la partie basse du conduit vertical ;
- la figure 4 est une vue schématique, en coupe longitudinale, de la partie d'extrémité amont de la vis longitudinale et de son auget ;
- la figure 5 est une coupe transversale selon le plan V-V de la figure 4 ;
- la figure 6 est un schéma sous forme de diagramme fonctionnel destiné à illustrer en vue de dessus la manière dont se fait l'actionnement séquentiel des différentes buses d'insufflation d'air comprimé.

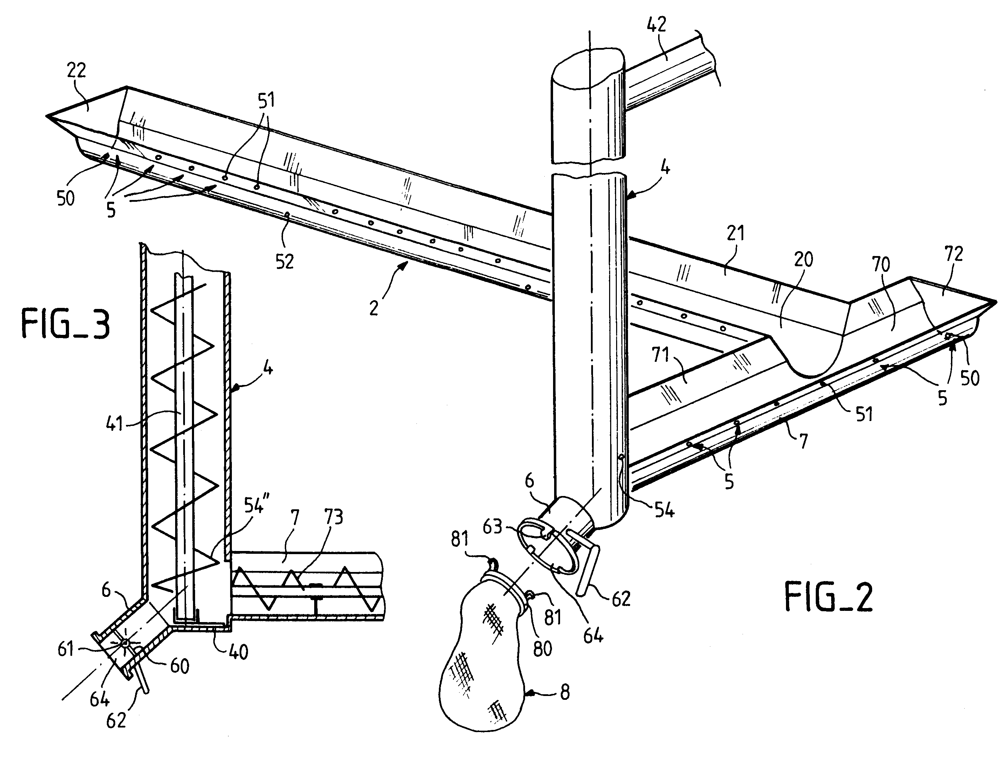

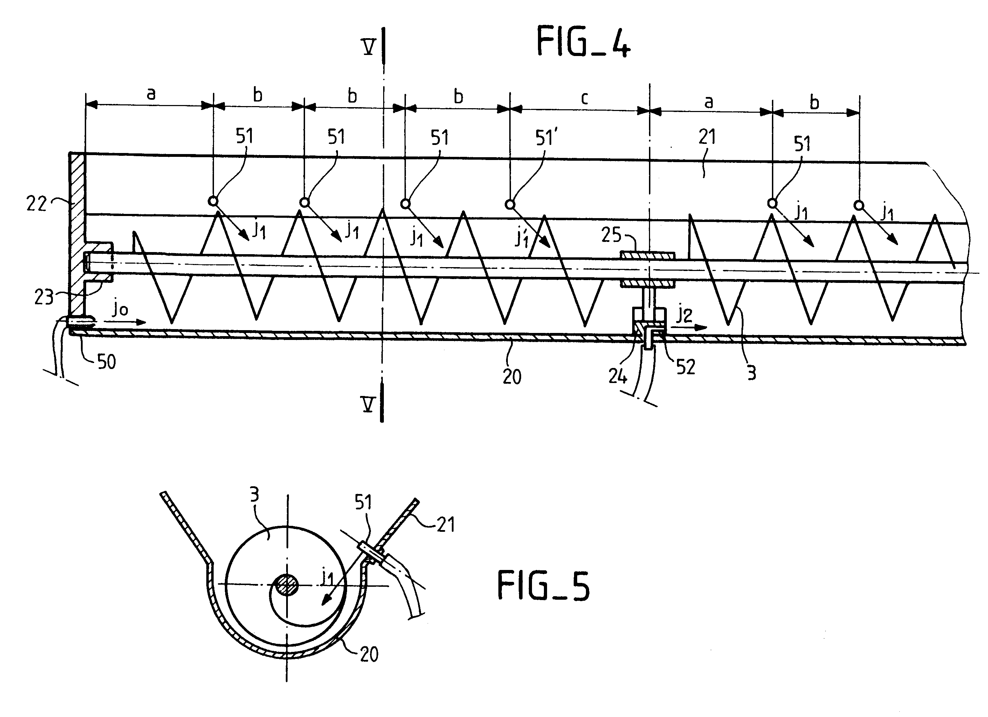

A la figure 2, on a représenté l'auget 2 déjà visible à la figure 1. Cet auget présente un fond semi-cylindrique 20 et deux parties latérales 21 inclinées pour former un "V" dont l'ouverture est tournée vers le haut (voir aussi figure 5).

Cet auget 2 est fermé à son extrémité amont par un flasque 22 (cloison transversale). Il débouche à son extrémité aval dans un auget similaire 7 disposé orthogonalement, c'est-à-dire transversalement si on considère l'axe longitudinal du véhicule, axe qui est parallèle à l'axe de la vis 3 logée dans l'auget 2. On a désigné par 71 les côtés inclinés de l'auget 7, et par la référence 70 son fond semi-cylindique.

A son extrémité amont, l'auget 7 est fermé par un flasque 72. A son extrémité aval, il débouche dans le conduit 4, au pied de celui-ci.

La figure 2 montre qu'il est prévu, tout au long des augets 2 et 7, un ensemble de buses d'insufflation d'air comprimé, symbolisées par des points et portant la référence générale 5.

L'ensemble de ces buses sont réparties à peu près régulièrement le long des augets.

Certaines de ces buses, désignées 51, sont situées le long de l'un des côtés 21, 71 des augets 2, respectivement 7. D'autres, référencées 50, sont situées à la base des flasques d'extrémité amont 22 et 72. D'autres, référencées 52, sont placées au fond du premier auget 2. Comme on le verra plus tard, ces buses sont montées dans les paliers intermédiaires de guidage de la vis 3 se trouvant dans l'auget 2. Dans l'auget transversal 7, nettement plus court, il n'est généralement pas nécessaire de prévoir de buse(s) de soufflage (de type 52) dans le (ou les) palier(s) intermédiaire(s).

La vis d'Archimède 41 qui est montée dans le conduit vertical 4 est guidée en rotation à son extrémité basse dans un palier reposant sur le fond plat 40 du conduit.

Du côté opposé à la vis 73 guidée dans l'auget transversal 7, est prévu un manchon 6 d'évacuation des résidus. Ce manchon se raccorde à la fois, par une ouverture oblique, au fond 40 et à la paroi cylindrique du conduit 4. Le manchon est incliné vers le côté et vers le bas, par exemple d'un angle de l'ordre de 45° par rapport à la verticale. A l'intérieur du manchon 6, dont l'orifice de sortie est désigné 64, est articulé un volet obturateur pivotant 60. Celui-ci à la forme d'un disque pouvant basculer autour d'un axe horizontal 61. Son basculement est commandé par un levier de manoeuvre 62.

Le bord extérieur du manchon a la forme d'un collerette qui est munie de trois griffes 63 servant d'organes de fixation rapide pour un sac récupérateur 8. Ce dernier est accroché à un anneau 80 qui possède des organes d'accrochage complémentaires 81 pouvant s'assembler de manière rapide, par exemple par rotation sur un fraction de tour, avec les organes 63. Une telle liaison est bien connue, par exemple pour assembler bout-à-bout des tuyaux à incendie.

Le sac 8 peut donc être mis en place facilement, lorsqu'on veut vider intégralement la carrosserie, le volet obturateur 60 se trouvant alors bien entendu dans sa position ouverte. En usage normal, on substitue au sac 8 un bouchon obturateur, ce dernier pouvant consister en un disque possèdant les mêmes organes de fixation que les organes 81, ce qui permet de le mettre en place et de l'enlever facilement du manchon 6.

Dans la partie basse du conduit 4 sont prévues également des buses d'insufflation d'air comprimé 54, agencées pour chasser pneumatiquement les produits en direction du manchon 6.

Comme on le voit plus particulièrement aux figures 4 et 5, les buses 51 qui sont montées sur les côtés 21 des augets, sont adaptées pour produire des jets d'air j1, symbolisés par des flèches, qui sont dirigés obliquement à la fois vers le bas et vers l'aval. L'inclinaison des jets, aussi bien vers le bas que vers l'aval, est de préférence comprise entre 30 et 60°, par exemple de l'ordre de 45°.

Ces jets vont donc atteindre l'espace compris entre le filet de vis et le fond d'auget 20, c'est-à-dire l'espace où se trouvent les résidus qui normalement ne peuvent être entraînés par la vis à la fin du vidage.

A la figure 4, on a désigné par la référence 25 un palier intermédiaire qui sert au guidage en rotation de la vis 3, la vis étant formée de plusieurs tronçons mis bout-à-bout.

L'embase 24 de montage du palier 25 sur le fond d'auget 20 sert au montage d'une buse 52 qui elle est adaptée pour produire un jet d'air comprimé j2 dirigé axialement, c'est-à-dire parallèlement à l'axe de la vis 3, tangentiellement au fond 20. La buse 50 placée à la base du flasque amont 22 produit un jet d'air j0 similaire.

Le diamètre des orifices de sortie de chaque buse est de l'ordre de 2 mm environ.

La buse 51′ qui est située immédiatement avant un palier intermédiaire 25 est placée à une distance de ce dernier telle que son jet j′1 chasse les produits résiduels qui ont tendance à s'accumuler contre la base 24 du palier. Une telle accumulation est due d'une part à l'obstacle que constitue le palier, et d'autre part à l'interruption du filet des éléments de vis à ce niveau.

A titre indicatif, le rayon de la partie cylindrique 20 est de l'ordre 90 mm, et la vis 3 à un rayon de l'ordre de 80 mm. Les différentes buses latérales 51 sont espacées les unes des autres d'une distance b de l'ordre de 30 cm. Cette distance peut être sensiblement plus grande en ce qui concerne l'écartement a des buses à soufflage axial 50 ou 52 avec la buse suivante 51, l'écartement a pouvant être de l'ordre de 50 cm. Généralement, l'écartement c de la buse 51′ par rapport à la buse de palier intermédiaire 52, sera voisin de b.

Une configuration tout à fait similaire des buses est prévue pour l'auget 7.

Il est bien entendu que le nombre total des buses sera fonction de la longueur des vis. A titre indicatif, le nombre de buses d'insufflation sera de l'ordre de vingt à trente pour la vis 3 dont la longueur totale peut atteindre 6 à 10 m, et de cinq à dix pour la vis transversale 73 dont la longueur pourra être de l'ordre de 1,5 m.

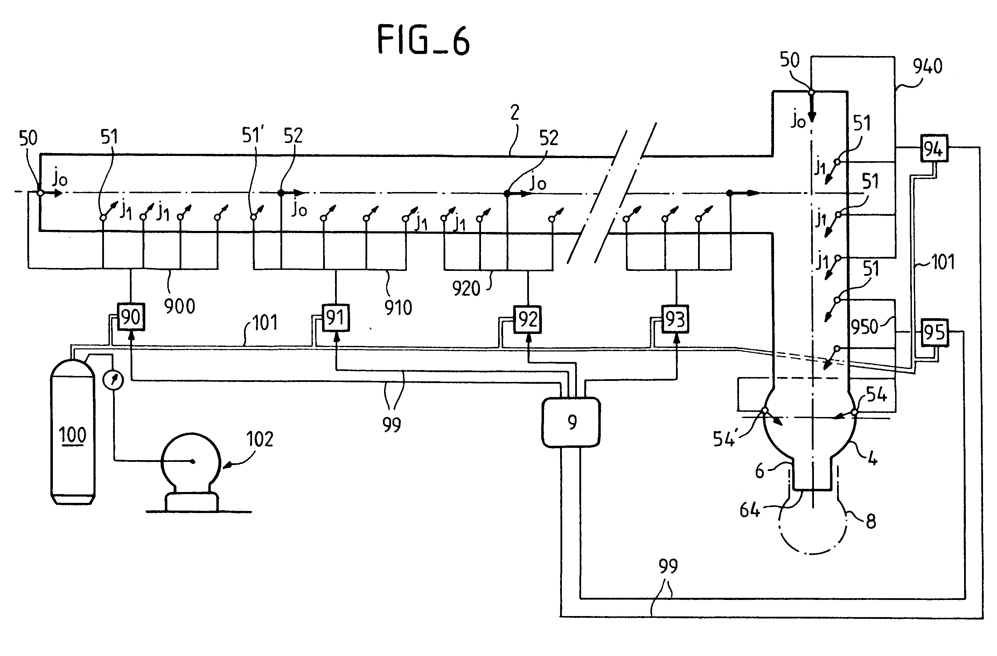

En référence à la figure 6, on va maintenant expliquer de quelle manière le dispositif qui vient d'être décrit est utilisé pour vider intégralement les résidus contenus dans la carrosserie 1.

Les buses 5 sont alimentées en air comprimé par une canalisation 101 branchée sur une bouteille d'air comprimé 100. Cette bouteille équipe le véhicule et est alimentée en air comprimé par le compresseur 102 dont est également pourvu le véhicule. L'ensemble des buses est réparti en séries de quatre ou de cinq buses, en fonction de leur position lorsqu'on parcourt l'installation dans le sens du cheminement des matières, c'est-à-dire d'amont en aval. Ainsi, les cinq premières buses (la buse 50 de flasque 22 et les quatre buses latérales 51 suivantes) sont alimentées par un réseau de conduits commun 900 et le passage de l'air comprimé dans ce réseau est commandé par une électrovanne 90. Il en est de même pour les séries de buses suivantes qui sont commandées par série à partir d'électrovannes 91, 92, 93, 94 et 95.

Toutes ces électrovannes sont pilotées par une armoire de commande 9 (type automate programmable). L'armoire 9 est programmée pour assurer l'ouverture successive des électrovannes 90 à 96. Chaque électrovanne va rester ouverte pendant un temps déterminé, par exemple pendant 5 secondes. Elle va être ensuite fermée tandis que la suivante va être ouverte, et ainsi de suite pour l'ensemble des électrovannes.

L'ensemble des buses va donc permettre une insufflation d'air de manière séquentielle, série après série, d'amont en aval de l'installation.

A titre indicatif, la pression de l'air comprimé fourni aux buses est de l'ordre de 6 à 8 bars.

Lorsque l'usager souhaite procéder au vidage intégral de la carrosserie, il opère de la manière exposée ci-après.

Il commence par ôter du manchon 6 le bouchon obturateur et par lui substituer le sac récupérateur 8.

Il actionne ensuite la manette 62 afin d'ouvrir la trappe constituée par le volet pivotant 60. Une grande partie des résidus contenus dans les conduits 42 et 4 s'écoulent alors par gravité à travers le manchon 6 dans le sac 8.

Il reste aussi dans les augets 2 et 7 une quantité non négligeable de résidus.

Pour les recueillir, l'opérateur commence par faire tourner l'ensemble des vis, et notamment les vis 3 et 73, dans les mêmes sens qu'en cours d'usage normal (c'est-à-dire lors de la livraison de matières) mais à une vitesse sensiblement inférieure à la vitesse de travail, par exemple à vitesse moitié.

Il met ensuite en fonctionnement l'armoire programmable 9 qui va actionner séquentiellement les différentes électrovannes 90 à 96.

La première série de buses, alimentée par le réseau 900 en air comprimé, va faire avancer le produit se trouvant en fond d'auget, en regard de cette série de buses. L'action conjuguée du filet de vis qui, rappelons le, se trouve en rotation, et de l'air pousseur, permet de dégager la zone balayée par cette première série. Le produit dégagé est transféré en regard de la série de buses suivantes, tandis qu'elle est écrêtée par le filet de vis en mouvement. C'est la série de buses suivantes, qui est alors alimentée en air comprimé par ouverture de l'électrovanne 91, et le produit est transféré encore plus loin.

On obtient ainsi une progression de résidus, qui arrivent dans l'auget 7 puis, de la même manière, sont transférés à l'extrémité aval de ce dernier, au pied du conduit vertical 4. A cet endroit, les différentes buses 54, 54′ et 54˝, tout en complètant le vidage gravitaire des résidus provenant du conduit 4, favorisent l'évacuation de l'ensemble des résidus dans le manchon 6.

De cette manière, on récupère pratiquement tous les résidus dans le sac 8. Le sac est ensuite enlevé, la trappe 60 refermée et le volet obturateur mis en place sur l'orifice de sortie 64.

La carrosserie est alors prête pour recevoir une nouvelle livraison (dans le cas d'une carrosserie compartimentée contenant des produits différents), ou un nouveau chargement de matières qui peut être de nature très différente de celle des matières précédentes, sans risque d'interférence entre les deux lots.

Il va de soi que le principe selon l'invention peut être appliqué à des agencements de vis très différents de celui qui a été décrit à simple titre d'exemple. Il s'applique en particulier à des fonds de citernes étagés comprenant des vis d'Archimède disposées sur des niveaux différents. Il s'applique aussi à des dispositifs de transport comportant plusieurs vis d'Archimède parallèles, par exemple deux vis placées côte-à-côte.

Enfin, il est possible d'implanter les buses 51 sur les deux côtés de l'auget, par exemple alternativement d'un côté et de l'autre, pour obtenir une disposition en quinconce.

## Revendications

1. Procédé pour vider intégralement de ses résidus la carrosserie d'un véhicule de transport de matières pulvérulentes ou granulaires, dont le fond est équipé d'au moins une vis d'Archimède rotative guidée dans un auget, et adaptée pour amener les matières contenues dans la carrosserie vers un conduit distributeur (4), caractérisé par le fait que, ladite vis d'Archimède (3, 73) étant mise en rotation, on insuffle de l'air comprimé en direction de la zone comprise entre la vis (3, 73) et le fond de l'auget (2, 7) à l'aide d'un ensemble de jets d'air répartis tout au long de la vis (3, 73), et dirigés vers l'aval si on considère le sens de déplacement des matières transportées par celle-ci, ces jets d'air étant mis en oeuvre séquentiellement d'amont en aval de manière à refouler progressivement les résidus vers un orifice de sortie (64) situé à l'extrémité aval de la vis (3, 73), où on les récupère.

2. Dispositif pour vider intégralement de ses résidus la carrosserie (10) d'un véhicule (1) de transport de matières pulvérulentes ou granulaires, dont le fond (12) est équipé d'au moins une vis d'Archimède rotative (3, 73) guidée dans un auget (2, 7), et adaptée pour amener les matières contenues dans la carrosserie (10) vers un conduit distributeur (64), caractérisé par le fait qu'il comprend une série de buses (5) d'insufflation d'air comprimé qui sont disposées régulièrement le long dudit auget (2, 7) et qui sont adaptés pour produire dans la zone comprise entre la vis d'Archimède (3, 73) et le fond de l'auget (2, 7) des jets d'air dirigés vers l'aval (si on considère le sens de déplacement des matières transportées par la vis), et qu'il est prévu à l'extrémité aval de la vis (3) un orifice de sortie (64) des résidus.

3. Dispositif selon la revendication 2, caractérisé par le fait qu'il comprend une série de buses (51) disposées sur le côté de l'auget et agencées pour produire des jets d'air (j1) dirigés obliquement, vers le bas et vers l'aval.

4. Dispositif selon l'une des revendications 2 ou 3, caractérisé par le fait qu'il comporte des buses (50, 52) agencées pour produire des jets d'air (j0, j2) dirigés tangentiellement au fond (20, 70) de l'auget, et parallèlement à l'axe de la vis.

5. Dispositif selon la revendication 4, caractérisé par le fait que les buses (50, 52) qui produisent des jets d'air dirigés transversalement au fond de l'auget et parallèlement à l'axe de la vis, sont disposées dans les flasques (22, 72) correspondant à la cloison amont des augets (2, 7) et/ou dans les supports (24) des paliers de guidage (25) de la vis (3, 73).

6. Dispositif selon l'une des revendications 2 à 5, caractérisé par le fait qu'il comporte des moyens permettant d'actionner séquentiellement l'ensemble des buses (5) de l'amont vers l'aval, ces moyens comprenant par exemple un ensemble d'électrovannes (90, 91, ... 95) pilotées par une armoire de commande programmable (9).

7. Dispositif selon l'une des revendication 2 à 6, caractérisé par le fait que les buses (5) reçoivent l'air comprimé d'une bouteille (100) alimentée par un compresseur (102) équipant le véhicule.

8. Dispositif selon l'une des revendications 2 à 7, destiné à une carrosserie (10) équipée de plusieurs vis d'Archimède (3, 73) travaillant en synchronisme à la suite l'une de l'autre, caractérisé par le fait qu'un ensemble de buses (5) d'insufflation d'air comprimé est associé à chacune d'entre elles.

9. Dispositif selon l'une des revendications 2 à 8, qui équipe une ou plusieurs vis d'Archimède (3, 73) qui débouchent au pied d'un conduit vertical (4) lui-même pourvu d'une vis d'Archimède (41) adaptée pour remonter les matières dans un conduit déverseur orientable (42) disposé à la partie haute de la carrosserie, caractérisé par le fait que ledit orifice de sortie (64) est placé à la base de ce conduit vertical (4) de manière à permettre l'évacuation par gravité des résidus contenus dans celui-ci.

10. Dispositif selon la revendication 9, caractérisé par le fait qu'il comprend au moins une buse (54, 54′) d'insufflation d'air comprimé disposée dans la partie inférieure dudit conduit vertical (4) et adapté pour favoriser l'évacuation des résidus vers ledit orifice de sortie (64).

11. Dispositif selon l'une des revendications 9 ou 10, caractérisé par le fait que ledit orifice de sortie (64) constitue l'ouverture du manchon (6) qui se raccorde à la base du conduit vertical (4) en interférant partiellement avec le fond (40) de celui-ci, et qui est dirigé obliquement vers le bas.

12. Dispositif selon la revendication 11, caractérisé par le fait que ledit manchon (6) est pourvu d'un volet obturateur (60) manoeuvrable manuellement.

13. Dispositif selon l'une des revendications 11 ou 12, caractérisé par le fait que ledit manchon (6) est muni de moyens de fixation rapide (63) aptes à coopérer avec des moyens complémentaires (81) prévus sur un sac de récupération des résidus (8), en vue de la mise en place de ce dernier sur le manchon.
